# EUROPÄISCHE PATENTANMELDUNG

(11) **EP 2 210 792 A2**
(43) Veröffentlichungstag der Anmeldung: **28.07.2010**
(21) Anmeldenummer: 09178608.7
(22) Anmeldetag: 10.12.2009
(51) Int. Cl.: B62B 1/14

(54) **Transportkarre für Werkzeuggeräte**

(30) Priorität: 22.01.2009 DE 102009000368
(71) Anmelder: HILTI Aktiengesellschaft, 9494 Schaan (LI)
(72) Erfinder: Reinicke, Tamara, 86916, Kaufering (DE); Hasler, Josef, 9452, Hinterforst (CH)

(57) **Zusammenfassung**

Die Erfindung betrifft eine Transportkarre (11) für Werkzeuggeräte, mit zwei koaxial zueinander angeordneten Laufrädern (12), mit einer Lasttragstruktur (16), mit einer wenigstens eine Handhabe (23) aufweisenden und mit der Lasttragstruktur (16) verbundenen Führungsstruktur (21) sowie mit mehreren, zylinderförmigen Aufnahmen (32) als Halteeinrichtung (31) für Werkzeuge (6, 7). In jeder zylinderförmigen Aufnahme (32) ist jeweils ein ein Federelement umfassendes Halteelement (41) angeordnet.

## Beschreibung

Die Erfindung betrifft eine Transportkarre für Werkzeuggeräte der im Oberbegriff von Patentanspruch 1 genannten Art.

Derartige Transportkarren dienen dem Transport eines Werkzeuggerätes und der mit diesem verwendbaren Werkzeuge, wie z. B. Meisselwerkzeugen.

Auf dem Markt werden z. B. von der Firma Hitachi Transportkarren für Werkzeuggeräte, wie Meisselhämmer oder Abbruchhämmer, angeboten, die zwei koaxial zueinander angeordnete Laufräder, eine Ladeschaufel mit Aufnahme für die Werkzeugaufnahme des Werkzeuggerätes als Lasttragstruktur sowie einen Griffbügel als Handhabe aufweisen, der mit der Lasttragstruktur über eine Führungsstruktur verbunden ist. Für den Transport und Halterung der Werkzeuge, wie ein Spitzmeissel oder ein Spatmeissel, sind als Halteeinrichtung mehrere zylinderförmige Aufnahmen vorgesehen. Ein Werkzeug wird von oben her in eine Aufnahme eingeführt, wobei der Bund des Werkzeuges oder die Achse der Laufräder beim Einführen einen Anschlag für das Werkzeug bilden.

Nachteilig an der bekannten Transportkarre ist, dass in die Aufnahmen eingeführte Werkzeuge bei einem Bewegen der Transportkarre über einen unebenen oder holperigen Untergrund leicht aus den Aufnahmen herausgestossen werden können, was für den Benutzer einer derartigen Transportkarre sehr unangenehm ist. Des Weiteren können die eingeführten Werkzeuge bei einer im Wesentlichen vertikalen Ausrichtung der Transportkarre, z. B. bei einem Transport der Transportkarre auf einer Ladefläche eines Fahrzeuges, herausfallen.

Der vorliegenden Erfindung liegt die Aufgabe zugrunde, eine Transportkarre mit Halteeinrichtung für Werkzeuge bereitzustellen, welche die genannten Nachteile vermeidet und die einen sicheren Transport und eine sichere Lagerung von Werkzeugen unterschiedlichen Schaftdurchmessers erlaubt.

Die Aufgabe ist durch die Merkmale des unabhängigen Anspruchs gelöst. Vorteilhafte Weiterbildungen sind in den Unteransprüchen dargelegt.

Gemäss der Erfindung ist zumindest ein ein Federelement umfassendes Halteelement in der zumindest einen zylinderförmigen Aufnahme angeordnet.

Unter zylinderförmig wird in diesem Zusammenhang eine Form der zumindest einen, im Wesentlichen umfänglich geschlossenen Aufnahme verstanden, welche eine Längserstreckung in Einführrichtung aufweist, die grösser als eine senkrecht dazu verlaufende Erstreckung der zumindest einen Aufnahme ist. Dabei muss die zumindest eine Aufnahme nicht zwingend eine kreiszylindrische Ausgestaltung aufweisen.

Das Federelement des zumindest einen Halteelements verjüngt die entsprechende Aufnahme und erstreckt sich vorteilhaft über einen Grossteil der Längserstreckung dieser Aufnahme. Mit dem Federelement weist das zumindest eine Haltelement vorteilhafte elastische Eigenschaften und einen geringen Verschleiss auf. Beim Einführen des Werkzeugs, z. B. eines Einsteckendes eines Meissels, wird das Federelement des zumindest einen Halteelements beiseite gedrückt, womit das eingeführte Werkzeug zwischen dem Federelement des Halteelements und der Innenwandung der zumindest einen Aufnahme eingeklemmt wird und über den erzeugten Reibschluss in der zumindest einen Aufnahme sicher gehalten ist. Dabei ist das Werkzeug verdrehsicher in der zumindest einen Aufnahme gehalten, was insbesondere bei einem Spatmeissel als in der zumindest einen Aufnahme gehaltenes Werkzeug vorteilhaft ist. Ein gehaltenes Werkzeug kann sich während des Transports nicht derart verdrehen, dass allfällige Spitzen oder Vorsprünge des Werkzeugs über eine von der Transportkarre gebildeten Hülle, z. B. in Kniehöhe herausragen. Weiter kann infolge der reibschlüssigen Halterung des Werkzeugs in der zumindest einen Aufnahme dieses während dem Transport nicht mehr klappern, womit der Geräuschpegel gesenkt ist. Des Weiteren können unterschiedliche Grössen von Werkzeugen in der zumindest einen Aufnahme gehalten werden, da sich das zumindest eine, infolge des Federelementes elastische Halteelement an die Abmessungen des eingeführten Abschnitts des Werkzeugs anpasst.

Vorteilhaft ist in jeder Aufnahme der Transportkarre jeweils ein Halteelement vorgesehen. Alternativ sind in jeder Aufnahme mehrere Halteelemente vorgesehen, wobei zumindest zwei dieser Halteelemente sich in Bezug auf die Längserstreckung der entsprechenden Aufnahme zumindest bereichsweise überlappen.

Vorzugsweise ist das Federelement ein Abschnitt eines Bandstahls, womit das Federelement einfach herstellbar ist. Insbesondere ein Federelement aus einem Bandstahl, der bevorzugt ein Federstahl ist, weist vorteilhafte elastische Eigenschaften und einen geringen Verschleiss auf.

Bevorzugt weist das zumindest eine Halteelement an zumindest einem seiner Enden eine Abbiegung zum bereichsweisen Umgreifen eines Randes der zumindest einen zylinderförmigen Aufnahme auf, womit das Halteelement einfach an beziehungsweise in der zumindest einen Aufnahme festlegbar ist.

Vorzugsweise ist eine Einkerbung an zumindest einem der Ränder der zumindest einen zylinderförmigen Aufnahme zur Aufnahme eines Abschnitts des zumindest einen Halteelementes vorgesehen, womit das zumindest eine Haltelement im festgelegten Zustand gegen eine seitliche Verschiebung in der zumindest einen Aufnahme gesichert ist. Weist das zumindest eine Halteelement an zumindest einem seiner Enden eine Abbiegung auf, so wird vorteilhaft ein Teil dieser Abbiegung in der Einkerbung aufgenommen beziehungsweise diese Abbiegung umgreift zumindest bereichsweise einen Rand der Einkerbung.

Bevorzugt weist das zumindest eine Halteelement an beiden, einander gegenüberliegenden Enden jeweils eine Abbiegung zum bereichsweisen Umgreifen der einander gegenüberliegenden Ränder der zumindest einen zylinderförmigen Aufnahme auf. Das zumindest eine Halteelement erstreckt sich im Wesentlichen über die gesamte Längserstreckung der entsprechenden Aufnahme und verengt den von dieser Aufnahme gebildeten Aufnahmeraum entsprechend.

Vorteilhaft sind an beiden, einander gegenüberliegenden Rändern der zumindest einen Aufnahme jeweils Einkerbungen vorgesehen, deren Ränder im montierten Zustand des zumindest einen Halteelementes jeweils von einem Ende des Halteelementes umgriffen werden.

Vorzugsweise weist das zumindest eine Halteelement im entspannten Zustand eine Distanz zwischen seinen einander gegenüberliegenden Enden auf, die kleiner als eine entsprechende Längserstreckung der zumindest einen zylinderförmigen Aufnahme ist. Dadurch ist im montierten Zustand des zumindest einen Halteelementes dieses sicher in der entsprechenden Aufnahme gehalten.

Des Weiteren ermöglicht diese Ausgestaltung des zumindest einen Halteelementes eine einfache Montage in der entsprechenden Aufnahme. Beispielsweise wird ein Ende des Halteelementes um einen Rand der entsprechenden Aufnahme gelegt und anschliessend ein Werkzeug, z. B. ein entsprechend ausgebildetes Hilfswerkzeug, in diese Aufnahme eingeführt. Infolge der beim Einführen des Werkzeugs bedingten Längung des zumindest einen Halteelementes kommt das gegenüberliegende Ende des zumindest einen Halteelementes in eine Position zum Umgreifen des gegenüberliegenden Randes der Aufnahme und schnappt über diesen Rand. Somit ist ein Halteelement einfach und auch durch einen Anwender montierbar sowie bedarfsweise ersetzbar.

Die Erfindung wird nachstehend anhand eines Ausführungsbeispiels näher erläutert. Es zeigen:
Fig. 1 Eine Transportkarre in Perspektive;
Fig. 2 ein Teil der Aufnahmen im Grundriss;
Fig. 3 einen Schnitt durch eine Aufnahme gem. Linie III-III in Fig. 2; und
Fig. 4 ein Halteelement in Seitenansicht.

Grundsätzlich sind in den Figuren gleiche Teile mit den gleichen Bezugszeichen versehen.

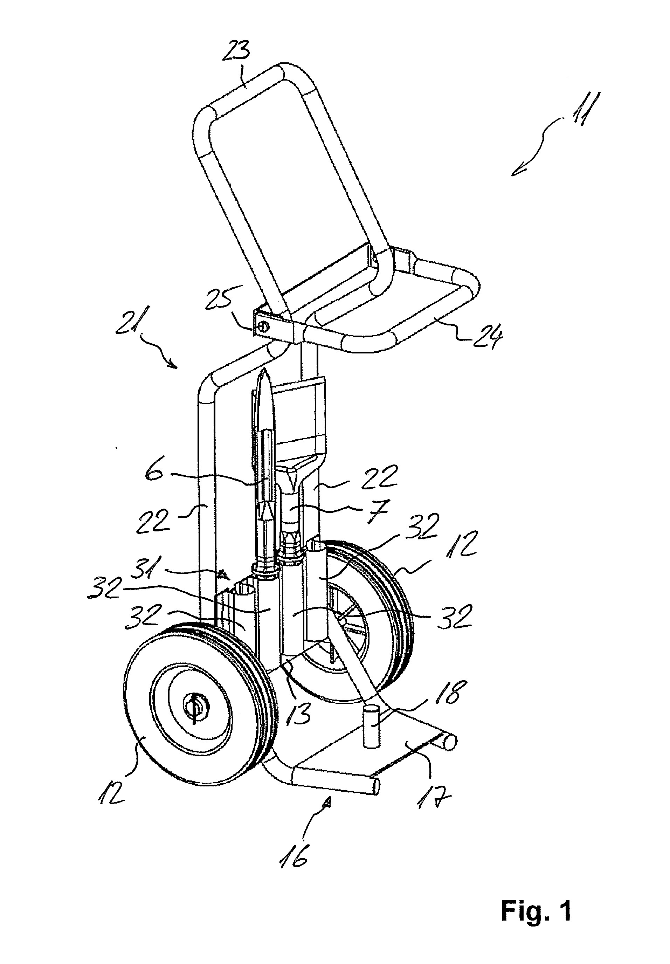

Die in der Figur 1 dargestellte Transportkarre 11 für ein hier nicht dargestelltes, schweres Werkzeuggerät, wie ein Meisselhammer oder ein Abbruchhammer, weist zwei koaxial zueinander angeordnete Laufräder 12 auf, die über eine Achse 13 miteinander verbunden sind. Weiter weist die Transportkarre 11 eine Ladeschaufel 17 mit einem Zentrierpin 18 als Lasttragstruktur 16 auf. Über den Zentrierpin 18 wird ein auf der Transportkarre 11 angeordnetes Werkzeuggerät im Bereich seiner Werkzeugaufnahme an der Transportkarre 11 gehalten. Die Ladeschaufel 17 ist an den freien Endbereichen von zwei Holmen 22 festgelegt, die eine Führungsstruktur 21 ausbilden und am gegenüberliegenden Ende über einen Griffabschnitt als Handhabe 23 der Transportkarre 11 miteinander verbunden sind. Weiter umfasst die Führungsstruktur 21 einen Schwenkbügel 24, der um ein Schwenklager 25 schwenkbar ist und ein auf der Transportkarre 11 angeordnetes Werkzeuggerät in einem Bereich beabstandet zu der Werkzeugaufnahme des Werkzeuggerätes an der Transportkarre 11 hält.

Zwischen den beiden Holmen 22 und oberhalb der Achse 13 der Laufräder 12 ist eine Halteeinrichtung 31 für Werkzeuge, wie einen Spitzmeissel 6 und einen Spatmeissel 7, vorgesehen, die vier zylinderförmige Aufnahmen 32 aufweist.

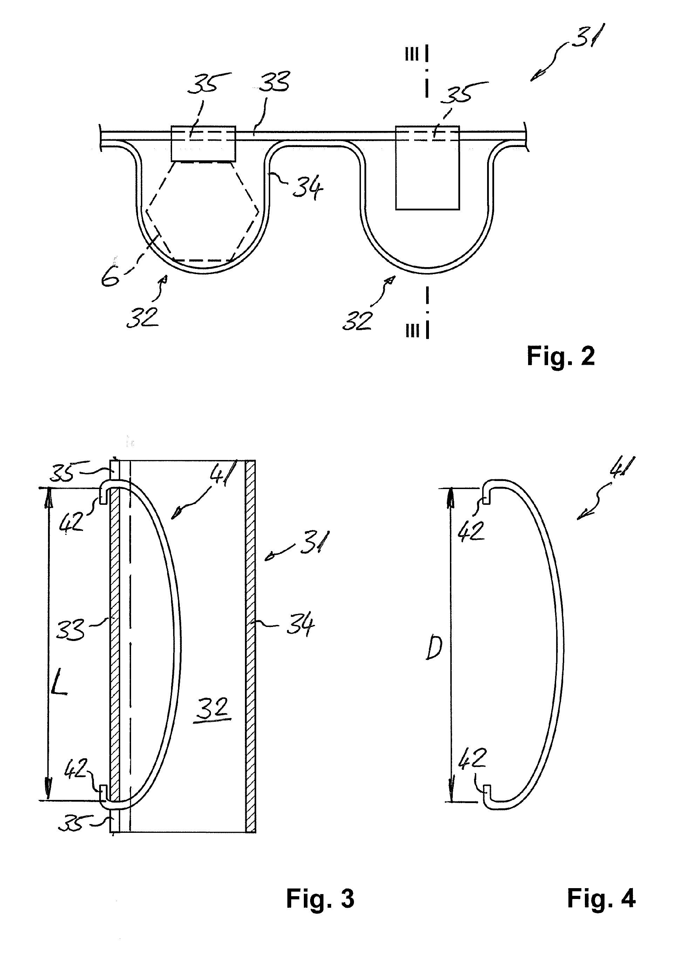

Die zylinderförmigen Aufnahmen 32, wie sie im Detail in den Figuren 2 und 3 gezeigt sind, werden von einem ersten, im Wesentlichen flachen Blechteil 33 und einem zweiten, wellenförmig verlaufenden Blechteil 34 gebildet, die an ihren Kontaktpunkten beispielsweise über Schweiss- oder Lötpunkte miteinander verbunden sind. Das erste Blechteil 33 weist an beiden einander gegenüberliegenden Rändern, im Bereich der zylinderförmigen Aufnahmen 32 bereichsweise angeordnete, zueinander beabstandete Einkerbungen 35 auf. Im Bereich der einander gegenüberliegenden Einkerbungen 35 weisen die zylinderförmigen Aufnahmen 32 eine geringere Längserstreckung L als im übrigen Bereich der zylinderförmigen Aufnahmen 32 auf.

In jeder der zylinderförmigen Aufnahmen 32 ist jeweils ein Federelement als Halteelement für ein in die zylinderförmige Aufnahme 32 eingeführtes Werkzeug 6 oder 7 angeordnet. Das Federelement, das ein Abschnitt eines Bandstahls ist, und erstreckt sich im Wesentlichen über die gesamte Längserstreckung der zylinderförmigen Aufnahme 32. Das Halteelement 41 weist an beiden, einander gegenüberliegenden Enden jeweils eine Abbiegung 42 zum bereichsweisen Umgreifen der einander gegenüberliegenden Ränder der einander gegenüberliegenden Einkerbungen 35 und somit der zylinderförmigen Aufnahme 32 auf.

Das Halteelement 41 (Fig. 4) weist im entspannten Zustand eine Distanz D zwischen seinen einander gegenüberliegenden Enden beziehungsweise Rundungen der Abbiegungen 42 auf, die kleiner als eine entsprechende Längserstreckung L der zylinderförmigen Aufnahme 32 ist.

## Patentansprüche

1. Transportkarre für Werkzeuggeräte, mit wenigstens zwei koaxial zueinander angeordneten Laufrädern (12), mit einer Lasttragstruktur (16), mit einer wenigstens eine Handhabe (23) aufweisenden und mit der Lasttragstruktur (16) verbundenen Führungsstruktur (21) sowie mit zumindest einer zylinderförmigen Aufnahme (32) als Halteeinrichtung (31) für Werkzeuge (6, 7), **dadurch gekennzeichnet, dass** zumindest ein ein Federelement umfassendes Halteelement (41) in der zumindest einen zylinderförmigen Aufnahme (32) angeordnet ist.

2. Transportkarre nach Anspruch 1, **dadurch gekennzeichnet, dass** das Federelement ein Abschnitt eines Bandstahls ist.

3. Transportkarre nach Anspruch 1 oder 2, **dadurch gekennzeichnet, dass** das zumindest eine Halteelement (41) an zumindest einem seiner Enden eine Abbiegung (42) zum bereichsweisen Umgreifen eines Randes der zumindest einen zylinderförmigen Aufnahme (32) aufweist.

4. Transportkarre nach einem der Ansprüche 1 bis 3, **dadurch gekennzeichnet, dass** eine Einkerbung (35) an zumindest einem der Ränder der zumindest einen zylinderförmigen Aufnahme (32) zur Aufnahme eines Abschnitts des Halteelementes (41) vorgesehen ist.

5. Transportkarre nach Anspruch 3 oder 4, **dadurch gekennzeichnet, dass** das zumindest eine Halteelement (41) an beiden, einander gegenüberliegenden Enden jeweils eine Abbiegung (42) zum bereichsweisen Umgreifen der einander gegenüberliegenden Ränder der zumindest einen zylinderförmigen Aufnahme (32) aufweist.

6. Transportkarre nach Anspruch 5, **dadurch gekennzeichnet, dass** das zumindest eine Halteelement (41) im entspannten Zustand eine Distanz (D) zwischen seinen einander gegenüberliegenden Enden aufweist, die kleiner als eine entsprechende Längserstreckung (L) der zumindest einen zylinderförmigen Aufnahme (32) ist.
